# EUROPÄISCHE PATENTANMELDUNG

(11) **EP 0 908 612 A1**
(43) Veröffentlichungstag der Anmeldung: **14.04.1999**
(21) Anmeldenummer: 98116490.8
(22) Anmeldetag: 01.09.1998
(51) Int. Cl.: F02D 41/06, F02D 41/40

(54) **Kraftstoff-Einspritzvorrichtung für eine luftverdichtende Brennkraftmaschine**

(30) Priorität: 09.10.1997 DE 19744683
(71) Anmelder: Bayerische Motoren Werke Aktiengesellschaft, 80788 München (DE)
(72) Erfinder: Neugebauer, Stephan, Dr., 4400 Steyr (AT)

(57) **Zusammenfassung**

Bei einer Kraftstoff-Einspritzvorrichtung für eine luftverdichtende, insbesondere aufgeladene Brennkraftmaschine, mit einer elektronischen Steuereinheit zur Bestimmung der Einspritzmenge für ein Mengenstellwerk und mit einem elektronisch gesteuerten oder geregelten Spritzversteller zur Veränderung des Spritzbeginns jeweils in Abhängigkeit vom Betriebspunkt der Brennkraftmaschine wird der Spritzbeginn zusätzlich in Abhängigkeit von der Laufzeit nach dem Start der Brennkraftmaschine korrigiert.

## Beschreibung

Die Erfindung betrifft eine Kraftstoff-Einspritzvorrichtung für eine luftverdichtende, insbesondere aufgeladene Brennkraftmaschine, mit einer elektronischen Steuereinheit für ein Mengenstellwerk zur Bestimmung der Einspritzmenge und mit einem elektronisch gesteuerten oder geregelten Spritzversteller zur Veränderung des Spritzbeginns jeweils in Abhängigkeit vom Betriebspunkt der Brennkraftmaschine.

Eine derartige Kraftstoff-Einspritzvorrichtung ist beispielsweise aus der DE 44 25 295 A1 für eine Dieselbrennkraftmaschine bekannt. Bei dieser bekannten Kraftstoff-Einspritzvorrichtung wird eine Veränderung des Spritzbeginns in Form einer Spritzbeginnkorrektur in Abhängigkeit von der Änderung der Drehzahl der Brennkraftmaschine vorgenommen.

Zum technischen Umfeld wird weiterhin auf die DE 39 28 875 A1 verwiesen.

Üblicherweise erfolgt bei luftverdichtenden Brennkraftmaschinen, d. h. insbesondere bei Diesel-Brennkraftmaschinen, die Kraftstoff-Einspritzung unter Berücksichtigung von Eingangsgrößen, nämlich in Abhängigkeit vom jeweiligen Maschinen-Betriebspunkt, der im allgemeinen mittels eines Lastwunschgebers, z. B. bei Kraftfahrzeugen mittels eines Fahrpedals, eingestellt wird. Der Lastwunschgeber wirkt dabei üblicherweise auf das Mengenstellwerk, mit Hilfe dessen die Einspritzmenge vorgegeben wird, während ein elektronisch gesteuerter oder geregelter Spritzversteller den Spritzbeginn, d. h. den Zeitpunkt der Kraftstoff-Einspritzung insbesondere unter Berücksichtigung der jeweils gewünschten Einspritzmenge festlegt.

Bei bisherigen Spritzbeginn-Ermittlungen für luftverdichtende Brennkraftmaschinen bleiben jedoch thermische Verhältnisse des Brennraums bislang unberücksichtigt. Daraus resultieren Nachteile nicht nur hinsichtlich der Geräuschentwicklung sondern auch hinsichtlich der Emissionen der Brennkraftmaschine, insbesondere wenn die Brennkraftmaschine für den Antrieb eines Kraftfahrzeuges vorgesehen ist.

Es ist Aufgabe der Erfindung, den Spritzbeginn an thermische Verhältnisse des Brennraums anzupassen.

Diese Aufgabe wird durch die kennzeichnenden Merkmale des Patentanspruchs 1 gelöst.

Danach wird der Spritzbeginn in Abhängigkeit von der Laufzeit nach dem Start der Brennkraftmaschine korrigiert.

Vorzugsweise wird der Spritzbeginn jedoch nicht nur in Abhängigkeit von der Laufzeit der Brennkraftmaschine, sondern auch in Abhängigkeit von der Kühlmitteltemperatur korrigiert.

Zwar könnte die Spritzbeginnkorrektur ausschließlich aufgrund der Kühlmitteltemperatur vorgenommen werden. Jedoch kann aufgrund der Kühlmitteltemperatur allein nicht unterschieden werden, ob die Brennkraftmaschine gerade erst gestartet wurde oder bereits länger in Betrieb ist. Diese Information ist jedoch bezüglich des Temperaturniveaus im Brennraum von erheblicher Bedeutung, da sich für beide Fälle auch bei gleicher Kühlmitteltemperatur deutlich unterschiedliche thermodynamische Verhältnisse der Verbrennung ergeben, wofür unterschiedliche Spritzbeginne wünschenswert sind.

Es empfiehlt sich, die Spritzbeginnkorrektur, die insbesondere eine Spätverstellung des Spritzbeginns zur Folge hat, durch Aufschaltung von Korrekturkennfeldern in die übliche, ohnehin bereits vorhandene elektronische Steuereinheit zu integrieren. Dies hält den Realisierungsaufwand gering.

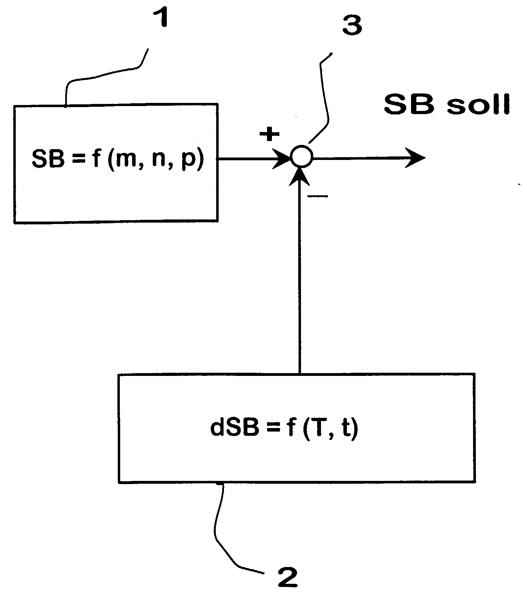

Wie eine derartige Softwarefunktion gestaltet sein kann, ist in der Zeichnung in Form einer Prinzipskizze dargestellt.

In der einzigen Figur ist ein Betriebspunkt-Kennfeld 1 und ein Korrektur-Kennfeld 2 dargestellt. Die Ausgangsgröße SB des Betriebspunkt-Kennfeldes 1 ist der Spritzbeginn in Abhängigkeit vom Betriebspunkt der Brennkraftmaschine, insbesondere in Abhängigkeit von aktuellen Eingangsgrößen, wie der Kraftstoffmasse m, der Drehzahl n und des Ladedrucks p. Die Ausgangsgröße dSB des Korrektur-Kennfeldes 2 ist der Spritzbeginn-Korrekturwert in Abhängigkeit von der Kühlmitteltemperatur T und der Laufzeit t der Brennkraftmaschine ab jedem Start. Der Spritzbeginn-Korrekturwert dSB wird im Additionspunkt 3 als Spritzbeginnspätverstellung, und daher subtraktiv zum üblichen Spritzbeginn SB, der entsprechend der bislang üblichen Berechnungsweise ermittelt wurde, addiert. Die Ausgangsgröße dieses Additionspunktes 3 ist der tatsächliche Sollwert SBsoll für den tatsächlichen Spritzbeginn unter Berücksichtigung der erfindungsgemäßen thermischen Spritzbeginnkorrektur, insbesondere Spritzbeginn-Spätverstellung.

Selbstverständlich kann eine erfindungsgemäße Spritzbeginnkorrektur beispielsweise in Verbindung mit einer digitalen Diesel-Motor-Regelung auch auf andere Weise realisiert werden. Stets ergeben sich die beschriebenen Vorteile insbesondere hinsichtlich der Emissionen und des Geräuschniveaus.

## Patentansprüche

1. Kraftstoff-Einspritzvorrichtung für eine luftverdichtende, insbesondere auf-geladene Brennkraftmaschine, mit einer elektronischen Steuereinheit zur Bestimmung der Einspritzmenge für ein Mengenstellwerk und mit einem elektronisch gesteuerten oder geregelten Spritzversteller zur Veränderung des Spritzbeginns jeweils in Abhängigkeit vom Betriebspunkt der Brennkraftmaschine, **dadurch gekennzeichnet, daß** der Spritzbeginn (SB) zusätzlich in Abhängigkeit von der Laufzeit (t) nach dem Start der Brennkraftmaschine korrigiert wird.

2. Kraftstoff-Einspritzvorrichtung nach Anspruch 1, dadurch gekennzeichnet, daß die Korrektur des Spritzbeginns (SB) durch Aufschaltung von Korrekturkennfeldern in der elektronischen Steuereinheit erfolgt.
